# EUROPEAN PATENT APPLICATION

(11) **EP 4 763 638 A1**
(43) Date of publication of application: **24.06.2026**
(21) Application number: 25224974.3
(22) Date of filing: 18.12.2025
(51) Int. Cl.: B60T 13/66, B60T 17/22, B60T 13/68

(54) **STATE DETERMINATION APPARATUS, STATE DETERMINATION METHOD, AND STATE DETERMINATION PROGRAM**

(30) Priority: 23.12.2024 JP 2024226146
(71) Applicant: Nabtesco Corporation, Tokyo 102-0093 (JP)
(72) Inventor: Aso, Masashi, Chiyoda-ku, Tokyo, 102-0093 (JP)
(74) Representative: Grünecker Patent- und Rechtsanwälte PartG mbB

(57) **Abstract**

A state determination apparatus (100) is a state determination apparatus (100) adapted to determine a state of at least one of an air control valve (24, 28) or a flow path (20) used in a vehicle brake, wherein the air control valve (24, 28) discharges air with an output pressure corresponding to an input pressure, which is a pressure of air introduced, to a supply flow path leading to a brake cylinder (16t), the state determination apparatus (100) including: an acquisition unit (110) that acquires a first measurement value of the input pressure and of the output pressure at one or more points of time in a pressure intensification period in which the input pressure increases and acquires a second measurement value of the input pressure and of the output pressure at one or more points of time in a pressure reduction period in which the input pressure decreases; a calculation unit (120) that calculates a difference in at least one of the input pressure or the output pressure between the pressure intensification period and the pressure reduction period, based on the first measurement value and the second measurement value; and a determination unit (130) that determines a state of at least one of the air control valve (24, 28) or the flow path (20) according to the difference.

## Description

This disclosure relates to a state determination apparatus, a state determination method, and a state determination program.

Brake apparatuses in railway vehicles, etc. are required to activate the brake safely and reliably. Therefore, it has been necessary to understand the state of the flow path from the compressed air supply source to the brake cylinder and the state of the air control valve provided in the middle of the flow path. Patent literature 1 describes a technology for correcting the hysteresis characteristic generated in the air control valve and maintaining a constant brake pressure in response to a brake command.

### [Patent literature 1] JPH5-58272

In the related art, it has been necessary to stop the operation of the vehicle in order to inspect the air control valve or the flow path, and a special operation such as opening and closing the brake cock has been required for inspection work.

The present disclosure addresses the issue described above, and a purpose thereof is to provide a technology for determining the state of the air control valve and the flow path used in a vehicle brake without requiring a special operation.

A state determination apparatus according to an embodiment of the present disclosure is a state determination apparatus adapted to determine a state of at least one of an air control valve or a flow path used in a vehicle brake, wherein the air control valve discharges air with an output pressure corresponding to an input pressure, which is a pressure of air introduced, to a supply flow path leading to a brake cylinder, the state determination apparatus including: an acquisition unit that acquires a first measurement value of the input pressure and of the output pressure at one or more points of time in a pressure intensification period in which the input pressure increases and acquires a second measurement value of the input pressure and of the output pressure at one or more points of time in a pressure reduction period in which the input pressure decreases; a calculation unit that calculates a difference in at least one of the input pressure or the output pressure between the pressure intensification period and the pressure reduction period, based on the first measurement value and the second measurement value; and a determination unit that determines a state of at least one of the air control valve or the flow path according to the difference.

A state determination method according to an embodiment of the present disclosure is a state determination method adapted to determine a state of at least one of an air control valve or a flow path used in a vehicle brake, wherein the air control valve discharges air with an output pressure corresponding to an input pressure, which is a pressure of air introduced, to a supply flow path leading to a brake cylinder, the state determination method including: acquiring a first measurement value of the input pressure and of the output pressure at one or more points of time in a pressure intensification period in which the input pressure increases and acquiring a second measurement value of the input pressure and of the output pressure at one or more points of time in a pressure reduction period in which the input pressure decreases; calculating a difference in at least one of the input pressure or the output pressure between the pressure intensification period and the pressure reduction period, based on the first measurement value and the second measurement value; and determining a state of at least one of the air control valve or the flow path according to the difference.

A state determination program according to an embodiment of the present disclosure is state determination program adapted to determine a state of at least one of an air control valve or a flow path used in a vehicle brake, wherein the air control valve discharges air with an output pressure corresponding to an input pressure, which is a pressure of air introduced, to a supply flow path leading to a brake cylinder, the state determination program including: a module that acquires a first measurement value of the input pressure and of the output pressure at one or more points of time in a pressure intensification period in which the input pressure increases and acquires a second measurement value of the input pressure and of the output pressure at one or more points of time in a pressure reduction period in which the input pressure decreases; a module that calculates a difference in at least one of the input pressure or the output pressure between the pressure intensification period and the pressure reduction period, based on the first measurement value and the second measurement value; and a module that determines a state of at least one of the air control valve or the flow path according to the difference.

Optional combinations of the aforementioned embodiments, and mutual substitution of constituting elements and implementations of the present disclosure between methods, apparatuses, programs, transitory or non-transitory recording mediums storing the program, systems, etc. may also be practiced as additional embodiments of the present disclosure.
Fig. 1 is a side view schematically showing a railway vehicle to which the vehicle brake control apparatus according to the embodiment is applied;
Fig. 2 schematically shows an exemplary configuration related to the flow path of the brake system of the railway vehicle;
Fig. 3 is a block diagram showing the configuration of the brake control apparatus and the state determination apparatus;
Fig. 4 shows examples of the first measurement value and the second measurement value;
Fig. 5 shows other examples of the first measurement value and the second measurement value;
Fig. 6 shows still other examples of the first measurement value and the second measurement value;
Fig. 7 shows an example of a method to acquire the first measurement value and the second measurement value by the acquisition unit;
Fig. 8 shows an example of the time-dependent change in the difference;
Fig. 9 is a flowchart showing an example of a state determination process executed by the state determination apparatus;
Fig. 10 is a flowchart showing an example of the process of determining the first threshold value and the second threshold value by the state determination apparatus;
Fig. 11 is a flow chart showing an example of the process of determining the degree of air leakage executed by the state determination apparatus; and
Fig. 12 illustrates the determination process of Fig. 11.

The invention will now be described by reference to the preferred embodiments. This does not intend to limit the scope of the present invention, but to exemplify the invention.

Of the embodiments disclosed in this specification, those composed of a plurality of objects may be such that the plurality of objects may be integrated, or, conversely, an object may be divided into a plurality of objects. Regardless of whether objects are integrated or not, they may be configured so as to achieve the purpose of the invention.

Of the embodiments disclosed in this specification, those in which a plurality of functions are provided in a distributed manner may be such that some or all of the plurality of functions may be aggregated, or, conversely, those in which a plurality of functions are aggregated may be such that some or all of the plurality of functions are distributed. Regardless of whether functions are aggregated or distributed, they may be configured so as to achieve the purpose of the invention.

Further, separate constituting elements that have something in common are distinguished by adding "first, second" or the like at the beginning of the name. These numerals are omitted when the constituting elements are referred to collectively. Although terms including ordinal numbers such as first and second are used to describe various constituting elements, these terms are used only for the purpose of distinguishing one constituting element from other constituting elements, and the constituting elements shall not be limited by these terms.

Hereinafter, the present disclosure will be described based on preferred embodiments with reference to the drawings. In the embodiments and variations, the same or equivalent constituting elements and members shall be denoted by the same reference numerals, and duplicative explanations will be omitted appropriately. The dimension of the members in the drawings shall be enlarged or reduced as appropriate to facilitate understanding. Those of the members that are not material to the description of the embodiments are omitted in the drawings.

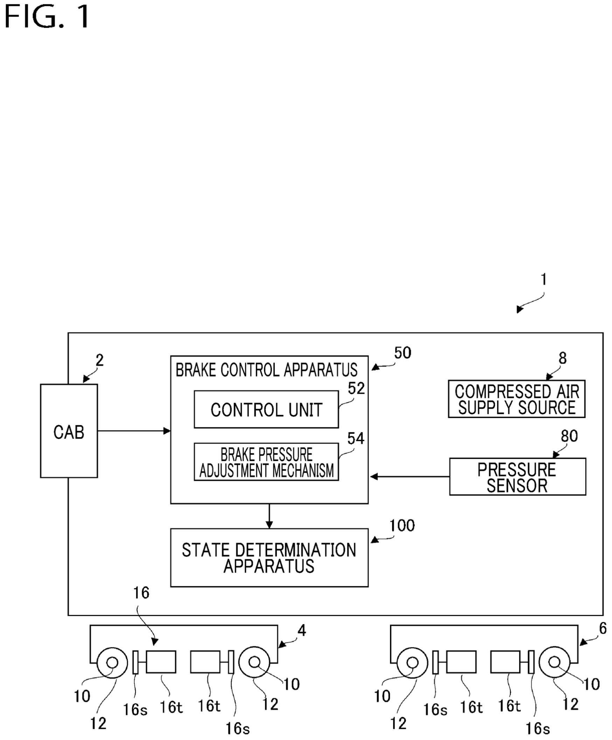

Hereinafter, an embodiment will be described with reference to the drawing. Fig. 1 is a side view schematically showing a railway vehicle 1 to which the railway vehicle brake control apparatus (hereinafter referred to as a "brake control apparatus 50") according to the embodiment is applied. First, an overview of the railway vehicle 1 will be given.

The functional blocks depicted in the drawings, including Fig. 1, are implemented in hardware such as electronic devices, electronic circuits, and mechanical components like a CPU or a memory of a computer, and in software such as a computer program. Fig. 1 depicts functional blocks implemented by the cooperation of these elements. Therefore, it will be understood by those skilled in the art that the functional blocks may be implemented in a variety of manners by a combination of hardware and software.

As shown in Fig. 1, the railway vehicle 1 is mainly equipped with a cab 2, a first carriage 4, a second carriage 6, a brake mechanism 16, a compressed air supply source 8, a brake control apparatus 50, a state determination apparatus 100, and a pressure sensor 80. The cab 2 is provided frontward in direction of travel of the vehicle body. The first carriage 4 is provided beneath and toward the front of the vehicle body. The second carriage 6 is provided beneath and toward the rear of the vehicle body. The brake mechanism 16 is provided in each of the first carriage 4 and the second carriage 6. The pressure sensor 80 is a generic term for first pressure sensor 80a-fourth pressure sensor 80d, which will be described later.

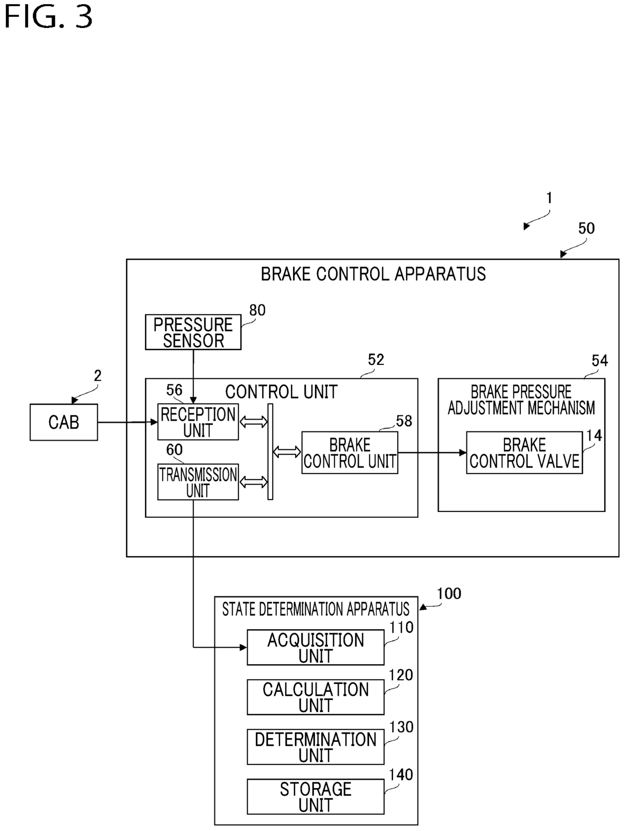

The compressed air supply source 8 is a tank that supplies the compressed air, and the pressure in the tank is kept within a predetermined range by means of an air pump. The compressed air supply source 8 is connected to a flow path 20 (see Fig. 3) and functions as a source of supply of compressed air to the flow path 20. The compressed air supply source 8 is an example of a fluid supply source, and a pressurized fluid supplied by the fluid supply source may be a gas such as air, nitrogen, and inert gas or may be a liquid such as water and oil. Hereinafter, the pressurized fluid is described as being a compressed air.

The brake control apparatus 50 is equipped with a control unit 52 and a brake pressure adjustment mechanism 54 that adjusts the pressure of a compressed air supplied to the brake mechanism 16 (hereinafter referred to as "brake pressure"). The control unit 52 controls the brake pressure adjustment mechanism 54 based on a brake command from the cab 2. Further, the brake control apparatus 50 transmits the measurement value of the pressure sensor 80 that measures the pressure of the compressed air in the flow path 20 to the state determination apparatus 100. Details of the brake control apparatus 50 will be described later.

The first carriage 4 and the second carriage 6 are respectively provided with two axles 10 distanced in the longitudinal direction. A wheel 12 is mounted at both ends of the axle 10. The brake mechanism 16 operates in accordance with the brake pressure that is input. The brake mechanism 16 has a friction member 16s that generates a braking force on the wheel 12 and a brake cylinder 16t that drives the friction member 16s.

The friction member 16s is, for example, a brake pad. The brake cylinder 16t is connected to the flow path 20 (see Fig. 3). The brake cylinder 16t is activated as the compressed air having a brake pressure is supplied through the flow path 20 to increase the brake cylinder pressure. When the brake cylinder 16t is activated, the friction member 16s is pressed against the tread of the wheel 12, creating a braking force on the wheel 12.

The state determination apparatus 100 determines the state of at least one of the air control valve or the flow path 20 used in the railway vehicle brake based on the measurement value of the pressure sensor 80. The air control valve for which the state determination apparatus 100 determines the state is, for example, a variable load valve 24 (see Fig. 3) and a relay valve 28 (see Fig. 3). Details of the state determination apparatus 100 will be described later.

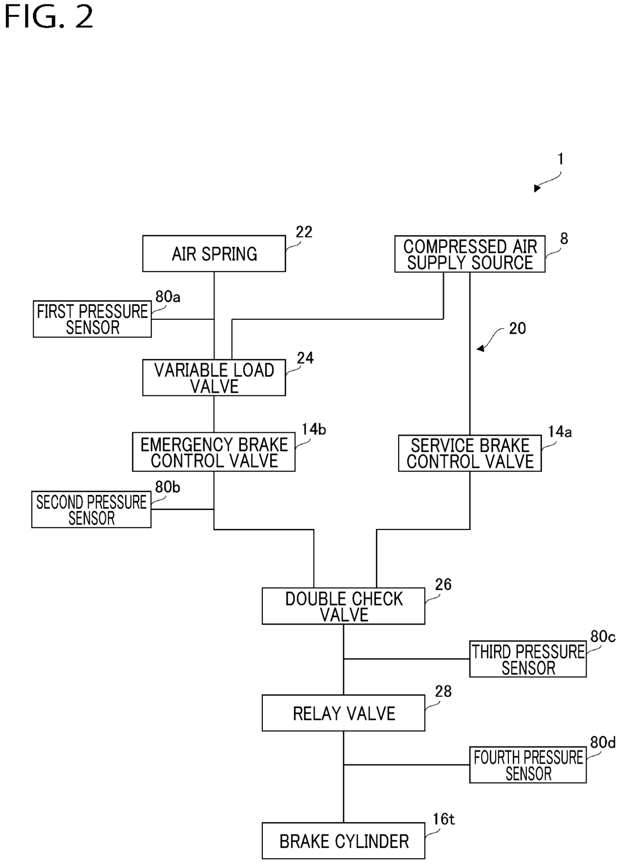

Fig. 2 schematically shows an exemplary configuration related to the flow path 20 of the brake system of the railway vehicle 1. The flow path 20 is a supply channel for supplying the compressed air. The flow path 20 is partitioned by, for example, a pipe made of metal that partitions most of the flow path 20 and an air hose made of flexible resin etc. connecting the pipe and the brake cylinder 16t.

In addition to the compressed air supply source 8 and the brake cylinder 16t described above, an air spring 22, the variable load valve 24, a service brake control valve 14a, an emergency brake control valve 14b, a double check valve 26, and a relay valve 28 are connected to the flow path 20. Further, the first pressure sensor 80a-fourth pressure sensor 80d for measuring the pressure of the compressed air at each position of the flow path 20 are provided.

The variable load valve 24 generates a variable load pressure using the compressed air pressure supplied from the compressed air supply source 8, based on the pressure of the air spring 31 supporting the railway vehicle 1. This variable load pressure is a pressure determined by the total weight of the railway vehicle 1, including the weight of the passengers. The variable load valve 24 outputs the compressed air with an output pressure corresponding to the input pressure, which is the pressure of compressed air introduced from the air spring 31, to the supply flow path leading to the emergency brake control valve 14b. There is a positive correlation between the input pressure input to the variable load valve 24 and the output pressure output from the variable load valve 24. In other words, the greater the input pressure input to the variable load valve 24, the greater the output pressure output from the variable load valve 24, and the smaller the input pressure input to the variable load valve 24, the smaller the output pressure output from the variable load valve 24.

The service brake control valve 14a generates, based on a brake signal described later, a brake command pressure using the compressed air supplied from the compressed air supply source 8 and supplies the pressure to the double check valve 26 so as to generate a target braking force designated by the service brake command described later.

The emergency brake control valve 14b supplies the variable load pressure of the variable load valve 24 to the double check valve 26 as an emergency brake pressure in response to the stop of supply of an excitation signal described later so as to generate a braking force for emergency braking. The emergency brake control valve 14b of the embodiment is a valve that switches the internal air passage by exciting and de-energizing an electromagnetic coil. The emergency brake control valve 14b is excited in response to an excitation signal described later under normal conditions and blocks the supply of the variable load pressure from the variable load valve 24. Meanwhile, the emergency brake control valve 14b is de-energized as the supply of the excitation signal from the brake control unit 58 of the brake control apparatus 50 is stopped. As a result, the variable load pressure of the variable load valve 24 is supplied to the double check valve 26 as the emergency brake pressure by way of the emergency brake control valve 14b.

The double check valve 26 is a valve that has two input ports and one output port. The double check valve 26 is configured to output, when fluids having different pressures are respectively supplied to the two input ports, the larger pressure to the output port. One of the input ports of the double check valve 26 is connected to the service brake control valve 14a, and the other input port is connected to the emergency brake control valve 14b. Therefore, the output port of the double check valve 26 outputs the larger of the brake command pressure from the service brake control valve 14a and the emergency brake pressure from the emergency brake control valve 14b.

The relay valve 28 uses the compressed air from the compressed air supply source 8 to amplify the capacity of the brake command pressure or the emergency brake pressure supplied via the double check valve 26. This causes the brake command pressure or the emergency brake pressure with amplified capacity to be output. The brake pressure output from the relay valve 28 is supplied to the brake cylinder 16t via a slip control valve (not shown), etc. The relay valve 28 outputs the compressed air with an output pressure corresponding to the input pressure, which is the pressure of the compressed air introduced from the double check valve 26, to the supply flow path leading to the brake cylinder 16t. There is a positive correlation between the input pressure input to the relay valve 28 and the output pressure output from the relay valve 28. In other words, the greater the input pressure input to the relay valve 28, the greater the output pressure output from the relay valve 28, and the smaller the input pressure input to the relay valve 28, the smaller the output pressure output from the relay valve 28. The relay valve 28 may be provided for each axle of the wheel 12.

The first pressure sensor 80a measures the pressure of the compressed air introduced into the variable load valve 24. In the illustrated example, the first pressure sensor 80a is provided in the flow path 20 between the air spring 22 and the variable load valve 24. The second pressure sensor 80b measures the pressure of the compressed air discharged from the variable load valve 24. In the illustrated example, the second pressure sensor 80b is provided in the flow path 20 between the emergency brake control valve 14b and the double check valve 26. The third pressure sensor 80c measures the pressure of the compressed air introduced into the relay valve 28. In the illustrated example, the third pressure sensor 80c is provided in the flow path 20 between the double check valve 26 and the relay valve 28. The fourth pressure sensor 80d measures the pressure of the compressed air discharged from the relay valve 28. In the illustrated example, the fourth pressure sensor 80d is provided in the flow path 20 between the relay valve 28 and the brake cylinder 16t.

Fig. 3 is a block diagram showing the configuration of the brake control apparatus 50 and the state determination apparatus 100. As shown in Fig. 3, the control unit 52 of the brake control apparatus 50 includes a reception unit 56, a brake control unit 58, and a transmission unit 60. The brake pressure adjustment mechanism 54 includes a brake control valve 14. The brake control valve 14 is a generic term for the service brake control valve 14a and the emergency brake control valve 14b. The brake pressure adjustment mechanism 54 may further include other valves such as a slip control valve. The slip control valve is a valve mechanism that eliminates a slip by reducing the brake pressure by discharging air out of the flow path 20 when the wheel 12 slips while the railway vehicle 1 is being braked by the brake mechanism 16.

The reception unit 56 receives a service brake command and an emergency brake command as the brake command from the cab 2. The service brake command is a command for activating the brake mechanism 16 to generate a target braking force designated according to a braking operation. The emergency brake command is a command for activating the brake mechanism 16 in an emergency. The emergency brake command is, for example, supplied to the reception unit 56 from the cab 2 of the railway vehicle 1 in response to the braking operation by the driver or the reception of an emergency stop signal from an apparatus external to the railway vehicle 1.

The reception unit 56 further receives the value of the pressure of the compressed air in the flow path 20, which is the measurement value of the pressure sensor 80.

The brake control unit 58 sets the target braking force in response to the service brake command and controls the brake control valve 14 to generate the target braking force. For example, the brake control unit 58 sets the braking force designated by the service brake command as the target braking force and supplies a brake signal for generating the target braking force thus set to the service brake control valve 14a. The brake control unit 58 excites the emergency brake control valve 14b by supplying an excitation signal to emergency brake control valve 14b while an emergency brake command is not being received, thereby cutting off, in the emergency brake control valve 14b, the supply of an emergency brake pressure to the brake cylinder 16t. The brake control unit 58 sets a predetermined braking force as the target braking force in response to the emergency brake command and and controls the brake control valve 14 to generate the target braking force. For example, the brake control unit 58 de-energizes the emergency brake control valve 14b by stopping the supply of the excitation signal to the emergency brake control valve 14b in response to the emergency brake command, thereby supplying the emergency brake pressure with amplified capacity to the brake cylinder 16t via the emergency brake control valve 14b. This causes the predetermined braking force for emergency braking to be set as the target braking force.

The transmission unit 60 transmits the measurement value of the pressure sensor 80 received by the reception unit 56 to the state determination apparatus 100.

The state determination apparatus 100 is equipped with an acquisition unit 110, a calculation unit 120, a determination unit 130, and a storage unit 140.

The acquisition unit 110 acquires the measurement value of the pressure sensor 80. Specifically, the acquisition unit 110 acquires the measurement value of the first pressure sensor 80a as the input pressure input to the variable load valve 24 and acquires the measurement value of the second pressure sensor 80b as the output pressure output from the variable load valve 24. Further, the acquisition unit 110 acquires the measurement value of the third pressure sensor 80c as the input pressure input to the relay valve 28 and acquires the measurement value of the fourth pressure sensor 80d as the output pressure output from the relay valve 28. Hereinafter, the input pressure input to the variable load valve 24, which is the measurement value of the first pressure sensor 80a, is simply described as the input pressure, and the output pressure output from the variable load valve 24, which is the measurement value of the second pressure sensor 80b, is simply described as the output pressure. The following explanation also applies to the input pressure input to the relay valve 28, which is the measurement value of the third pressure sensor 80c, and to the output pressure output from the relay valve 28, which is the measurement value of the fourth pressure sensor 80d.

The acquisition unit 110 acquires the measurement value of the input pressure and the output pressure (hereinafter referred to as the "first measurement value") at one or more points of time during a pressure intensification period in which the input pressure increases. Further, the acquisition unit 110 acquires the measurement of the input pressure and the output pressure (hereinafter referred to as the "second measurement value") at one or more points of time during a pressure reduction period in which the input pressure decreases. The pressure intensification period can be a period of continuous increase in the input pressure or a period of intermittent increase. Similarly, the pressure reduction period may be a period of continuous decrease in the input pressure or a period of intermittent decrease. As mentioned above, there is a positive correlation between the input pressure and the output pressure. Therefore, the output pressure also increases during the pressure intensification period, and the output pressure decreases during the pressure reduction period.

The calculation unit 120 calculates at least one of the input pressure difference or the output pressure difference between the pressure intensification period and the pressure reduction period, based on the first measurement value and the second measurements acquired by the acquisition unit 110. The determination unit 130 determines the state of at least one of the relay valve 28 or the flow path 20 according to the difference calculated by the calculation unit 120. Details of the calculation unit 120 and the determination unit 130 will be described later.

The storage unit 140 stores various data. The storage unit 140 accumulates and stores, for example, the first measurement value, the second measurement value, and the difference calculated by the calculation unit 120. Further, the storage unit 140 stores the first threshold value and the second thresholds described later. The storage unit 140 may be a data logger that monitors and records, in real time, various data related to the operation of the brake such as history of braking operation, brake pressure, temperature, speed, and acceleration.

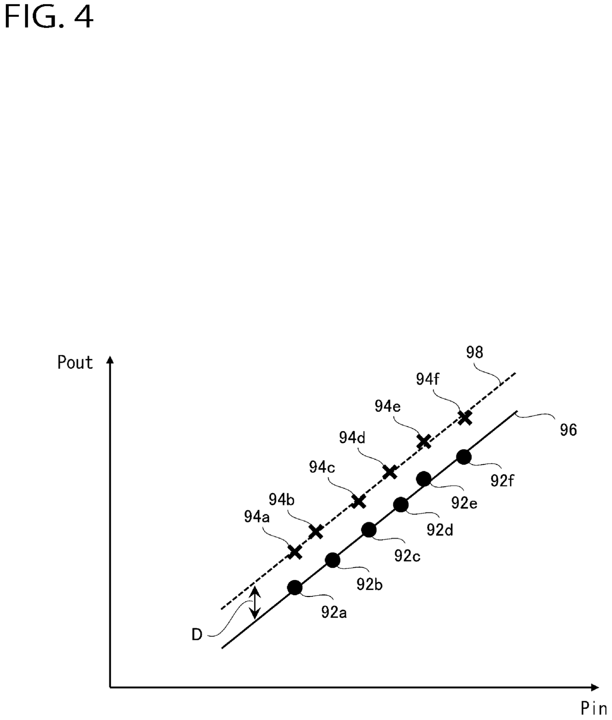

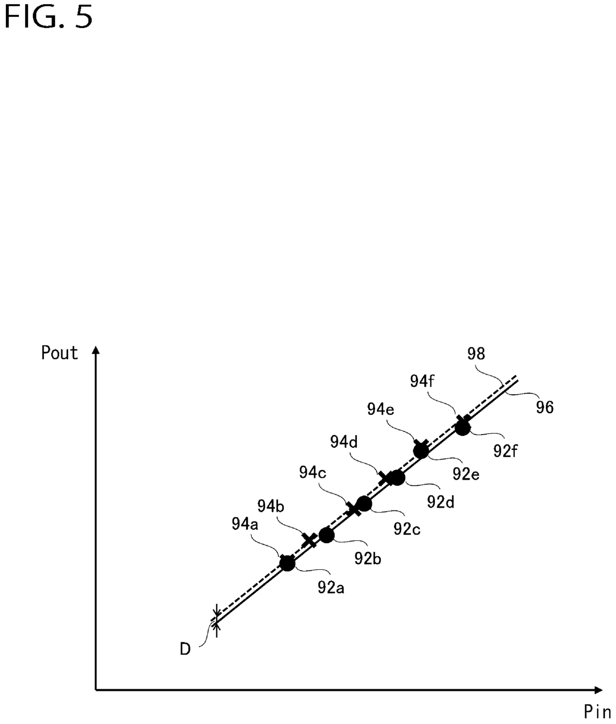

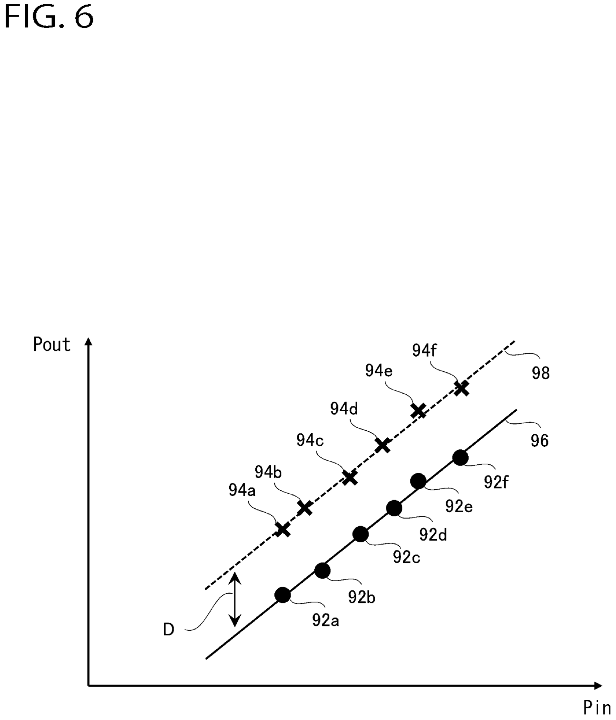

A description will now be given of examples of the first measurement value and the second measurement with reference to Fig. 4-Fig. 6. Fig. 4 shows examples of the first measurement values 92a-92f and the second measurement values 94a-94f. Referring to Fig. 4, the horizontal axis represents input pressure Pin, and the vertical axis represents output pressure Pout. The same applies to Fig. 5 and Fig. 6. Hereinafter, the first measurement values 92a-92f will collectively be referred to as the first measurement value 92, and the second measurement values 94a-94f will collectively be referred to as the second measurement value 94.

The first measurement values 92a-92f are acquired at different points of time during the pressure intensification period. In other words, the acquisition unit 110 acquires the first measurement value 92 at multiple points of time during the pressure intensification period. Similarly, the second measurements 94a-94f are acquired at different points of time during the pressure reduction period. In other words, the acquisition unit 110 acquires the second measurement value 94 at multiple points of time during the pressure reduction period. The multiple points of time at which the first measurement value 92 and the second measurement value 94 are acquired may be different points of time in one train operation, or they may be predetermined points of time in different train operations. By way of example, the acquisition unit 110 may acquire one first measurement value 92 during the pressure intensification period and acquire one second measurement value 94 during the pressure reduction period in one train operation, thereby acquiring multiple first measurement values 92 and multiple second measurement values 94 respectively after multiple train operations. Alternatively, the acquisition unit 110 may acquire the first measurement value 92 and the second measurement value 94 according to a normal braking operation or may acquire them when an operation mode for data acquisition is executed.

The calculation unit 120 calculates, as shown in Fig. 4, a difference D based on a first approximate line 96, which is an approximate line of the first measurement value 92, and a second approximate line 98, which is an approximate line of the second measurement value 94. The first approximate line 96 is calculated by, for example, applying the least square method to the first measurement values 92a-92f. Similarly, the second approximate line 98 is calculated by, for example, applying the least square method to the second measurement values 94a-94f. The difference D is a difference between the first approximate line 96 and the second approximate line 98. In the example shown in Fig. 4, the difference D is, given the first approximate line 96 and the second approximate line 98, a difference in the output pressure Pout that occurs when the input pressure Pin takes a given value. The difference D may be, given the first approximate line 96 and the second approximate line 98, a difference in the input pressure Pin that occurs when the output pressure Pout takes a given value. Alternatively, the difference D may be the shortest distance between the first approximate line 96 and the second approximate line 98.

A description will now be given of the difference D. As shown in Fig. 4, the first approximate line 96, which is an approximate line of the first measurement value 92 obtained during the pressure intensification period, gives, given the same input pressure Pin, a smaller output pressure Pout than the second approximate line 98, which is an approximate line of the second measurement value 94 obtained during the pressure reduction period. This is because the response of the output pressure Pout to the change in the input pressure Pin is delayed due to the influence of the working resistance of the movable part of the variable load valve 24, etc. In other words, the increase in the output pressure Pout is delayed with respect to the increase in the input pressure pin during the pressure intensification period, and the decrease in the output pressure Pout is delayed with respect to the decrease in input pressure pin in the pressure reduction period, and so this difference presents itself as the differential D. This property is also called hysteresis characteristic. The same also applies to the relay valve 28.

Fig. 5 shows other examples of the first measurement value 92 and the second measurement value 94. Referring to Fig. 5, descriptions common to Fig. 4 will be omitted as appropriate. In the example shown in Fig. 5, the difference D is smaller than in the example shown in Fig. 4. This is considered to be due to the fact that the pressure applied to the variable load valve 24 decreases due to an air leak that occurs in the flow path 20, and a smaller difference in the movement of the variable load valve 24 between the pressure intensification process and the pressure reduction process diminishes the hysteresis characteristic of the variable load valve 24.

Fig. 6 shows still other examples of the first measurement value 92 and the second measurement value 94. Referring to Fig. 6, descriptions common to Fig. 4 will be omitted as appropriate. In the example shown in Fig. 6, the difference D is greater than in the example shown in Fig. 4. This is considered to be due to the fact that the stubbornness of the variable load valve 24 that occurs increases the working resistance of the variable load valve 24, thereby augmenting the hysteresis characteristic of the variable load valve 24. It will be noted that stubbornness means a state in which smooth movement is hindered by the stuck movable part of the air control valve.

The property described above using Fig. 4-Fig. 6 can be used for determination by the determination unit 130. Referring to Fig. 4, it is assumed that the first measurement value 92 and the second measurement value 94 under normal conditions occur in the flow path 20 and the variable load valve 24. In this case, the difference D in Fig. 4 has a normal value, and so the determination unit 130 may determine that an air leak occurs in the flow path 20 when the difference D is below a predetermined value (referred to as the "first threshold value") smaller than the normal value, as shown in, for example, Fig. 5. Further, the determination unit 130 may determine that stubbornness of the variable load valve 24 occurs when the difference D exceeds a predetermined value (referred to as the "second threshold value") greater than the normal value, as shown in, for example, Fig. 4. The first threshold value and the second threshold value can be set as desired.

The difference D based on the first measurement value 92 and the second measurement value 94, obtained over a predetermined period of time (e.g. several months) since a point of time immediately after the use of the variable load valve 24 and the flow path 20, after maintenance, after replacement, etc., may be used as the normal value of differential D. In the subsequent period, the determination unit 130 may refer to the difference D based on the first measurement value 92 and the second measurement value 94 obtained over the most recent predetermined period of time (e.g. several months) and determine whether the difference D is smaller than the first threshold value or greater than the second threshold value.

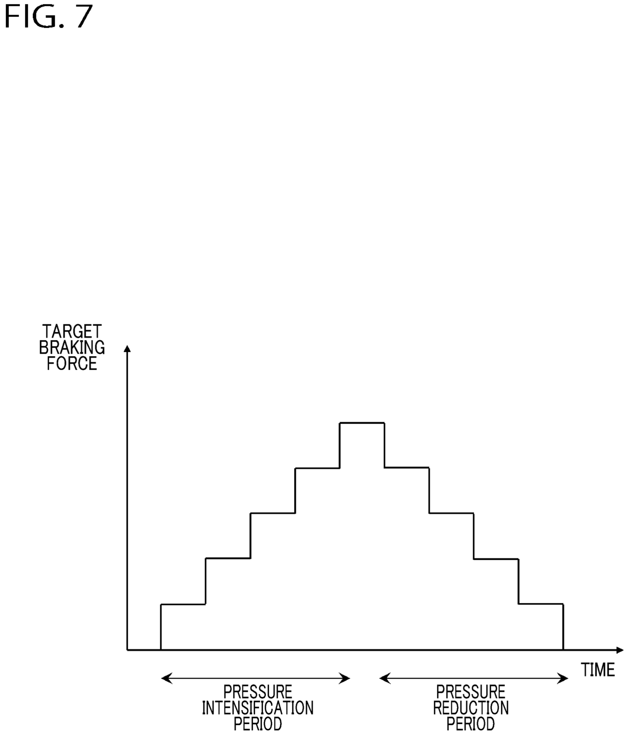

Fig. 7 shows an example of a method to acquire the first measurement value 92 and the second measurement value 94 by the acquisition unit 110. Referring to Fig. 7, the horizontal axis represents time, and the vertical axis represents target braking force of the service brake command. In the example shown in Fig. 7, the acquisition unit 110 acquires the first measurement value 92 at the point of time of each stage in the pressure intensification period in which the target braking force is gradually increased. After that, the acquisition unit 110 acquires the second measurement value 94 at the point of time of each stage in the pressure reduction period in which the target braking force is gradually decreased. This enables acquiring multiple first measurement values 92 and multiple second measurement values 94 in a single cycle of pressure intensification and pressure reduction periods.

Further, the acquisition unit 110 may acquire the first measurement value 92 and the second measurement value 94 at each point of time shown in Fig. 7 at the time of the shipment of the railway vehicle 1. Since the shipment of the railway vehicle 1 is highly likely to occur substantially on time, the influence of environmental factors such as temperature on the first measurement value 92 and the second measurement value 94 acquired can be reduced. The example shown in Fig. 7 may be executed by the driver's braking operation or may be automatically executed for data acquisition by the acquisition unit 110.

The acquisition unit 110 may obtain the first measurement value 92 and the second measurement value 94 when the railway vehicle 1 moves at a predetermined speed or below. The brake pressure is relatively stable when the railway vehicle 1 is running at a low speed so that the variation in the first measurement value 92 and in the second measurement value 94 can be reduced.

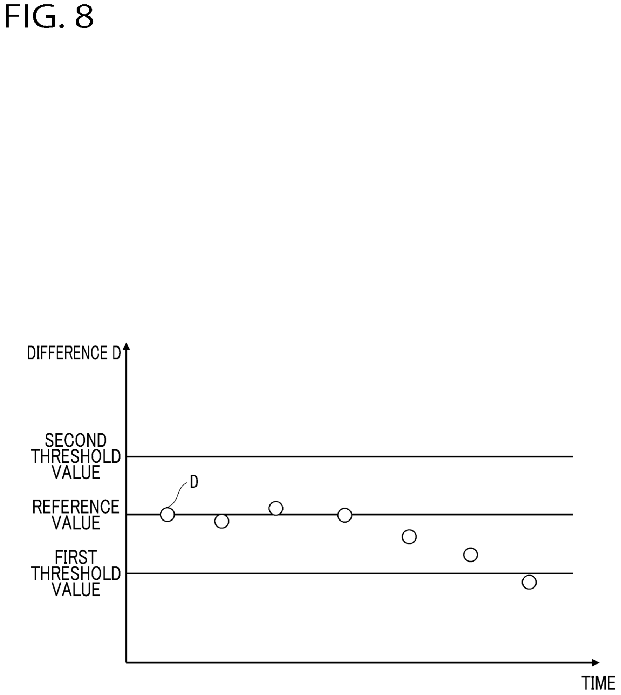

Fig. 8 shows an example of the time-dependent change in the difference D. Referring to Fig. 8, the horizontal axis represents time, and the vertical axis represents difference D. In the case that the differential D based on the first measurement value 92 and the second measurement value 94 acquired over the most recent predetermined period of time (e.g., several months) is repeatedly accumulated and stored in the storage unit 140, multiple differences D can be plotted at different positions on the time axis as shown in Fig. 8. In the example shown in Fig. 8, the difference D initially positioned near the reference value gradually decreases over time to fall below the first threshold value. In this case, the determination unit 130 determines that an air leak occurs in the flow path 20 at the point of time when the difference D falls below the first threshold value. The difference D gradually decreases before it falls below the first threshold value so that the determination unit 130 may determine that an air leak is likely to occur in the flow path 20 based on the transition in the difference D even at a point of time before the difference D falls below the first threshold value. Similarly, the determination unit 130 may, when the difference D is gradually increasing, determine that stubbornness of the variable load valve 24 is likely to occur based on the transition in the difference D even at a point of time before the difference D exceeds the second threshold value.

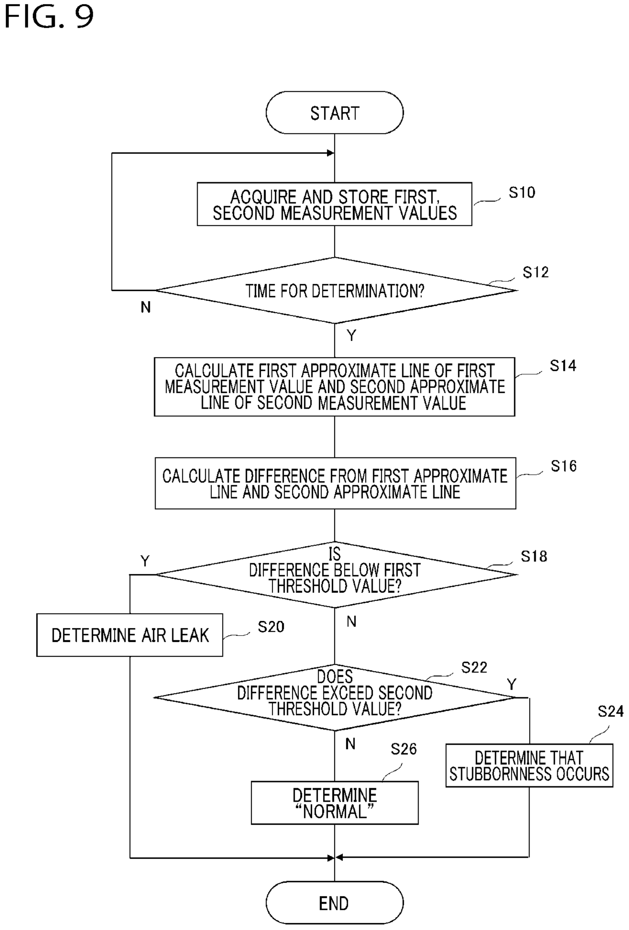

Fig. 9 is a flowchart showing an example of a state determination process executed by the state determination apparatus 100. The acquisition unit 110 acquires the first measurement value 92 and the second measurement value 94 and stores them in the storage unit 140 (S10). The timing of acquisition of the first measurement value 92 and the second measurement value 94 by the acquisition unit 110 is as described above.

When the point of time to make a determination by the determination unit 130 has not arrived (N in S12), control returns to step S10. In other words, the acquisition unit 110 acquires the first measurement value 92 and the second measurement value 94 and accumulates and stores them in the storage unit 140 until the point of time to make a determination by the determination unit 130 arrives. A determination by the determination unit 130 may be made at every predetermined period of time (e.g., every several months), when a certain number of measurement values are accumulated, or at a point of time based on the operation by the driver. When the point of time to make a determination by the determination unit 130 arrives (Y in S12), control proceeds to step S14.

The calculation unit 120 calculates the first approximate line 96, which is an approximate line of the first measurement value 92, and the second approximate line 98, which is an approximate line of the second measurement value 94 (S14). The first measurement value 92 and the second measurement value 94 used to calculate the first approximate line 96 and the second approximate line 98 may be measurement values acquired after the previous state determination process, respectively. In other words, the state determination process is applied to the measurement values acquired in the most recent predetermined period of time, etc.

The calculation unit 120 calculates the difference D based on the first approximate line 96 and the second approximate line 98 (S16). The determination unit 130 determines that an air leak occurs in the flow path 20 when the difference D is below the first threshold value (Y in S18) (S20). On the other hand, the determination unit 130 determines that stubbornness of the variable load valve 24 occurs when the difference D is equal to greater than the first threshold value (N in S18) and exceeds the second threshold value (Y in S22) (S24). The determination unit 130 determines that the flow path 20 and the air control valve are normal when the difference D is equal to or greater than the first threshold value (N in S18) and is equal to or less than the second threshold value (N in S22) (S26).

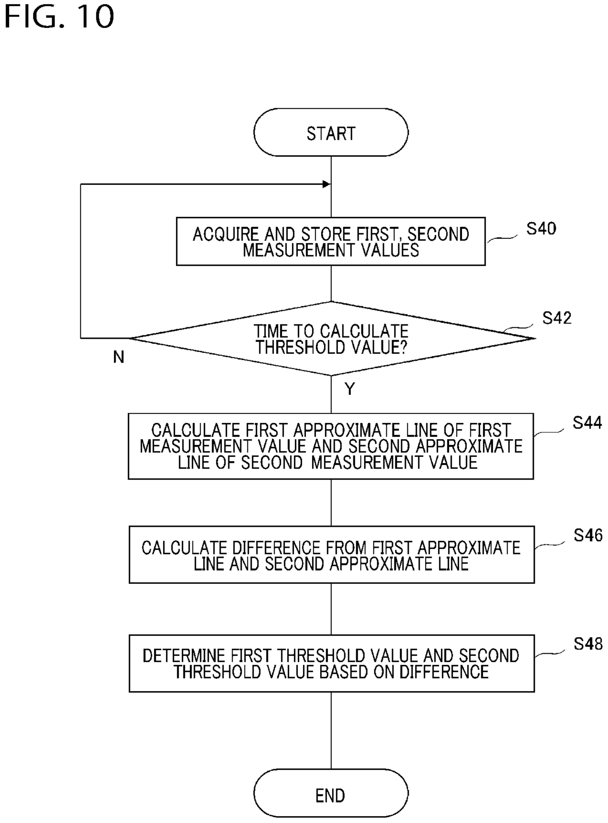

Fig. 10 is a flowchart showing an example of the process of determining the first threshold value and the second threshold value by the state determination apparatus 100. The acquisition unit 110 acquires the first measurement value 92 and the second measurement value 94 and stores them in the storage unit 140 (S40). The first measurement value 92 and the second measurement value 94 used for this determination process may be the same as the first measurement value 92 and the second measurement value 94 used in the calculation of the normal value of the difference D described above. Namely, the first measurement value 92 and the second measurement value 94 may be the values acquired during a period of time in which the flow path 20 and the air control valve are highly likely to be normal.

When the point of time for the calculation unit 120 to calculate the threshold value has not arrived (N in S42), control returns to step S40. In other words, the acquisition unit 110 acquires the first measurement value 92 and the second measurement value 94 and accumulates and stores them in the storage unit 140 until the point of time for the calculation unit 120 to calculate the threshold value arrives. The calculation unit 120 may calculate the threshold value i) after a predetermined period of time (e.g., after several months), ii) when a certain number of measurement values are accumulated, or iii) at a point of time based on the operation by the driver. When the point of time for the calculation unit 120 to calculate the threshold value arrives (Y in S42), control proceeds to step S44.

The calculation unit 120 calculates the first approximate line 96, which is an approximate line of the first measurement value 92, and the second approximate line 98, which is an approximate line of the second measurement value 94 (S44). The calculation unit 120 calculates the difference D based on the first approximate line 96 and the second approximate line 98 (S46). The calculation unit 120 defines the difference D calculated in step S46 to be the normal value and determines the first threshold value and the second threshold value based on this difference D (S48). In other words, as described above, the first threshold value is a value smaller than the difference D, and the second threshold value is a value greater than the difference D.

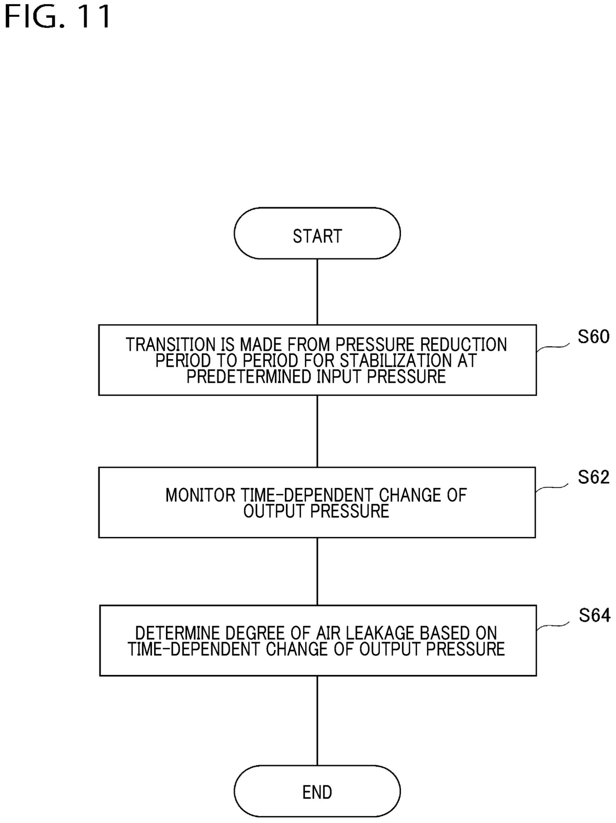

Fig. 11 is a flow chart showing an example of the process of determining the degree of air leakage executed by the state determination apparatus 100. This process is executed after the determination unit 130 determines that an air leak occurs in the flow path 20.

First, a transition is made from the pressure reduction period in which the input pressure Pin decreases to a period in which the pressure is stabilized at a predetermined input pressure Pin_1 (S60). After that, the state determination apparatus 100 monitors the time-dependent change in the output pressure Pout while the pressure is stabilized at the input pressure Pin_1 (S62). The determination unit 130 determines the degree of air leakage in the flow path 20 based on the time-dependent change in the output pressure Pout.

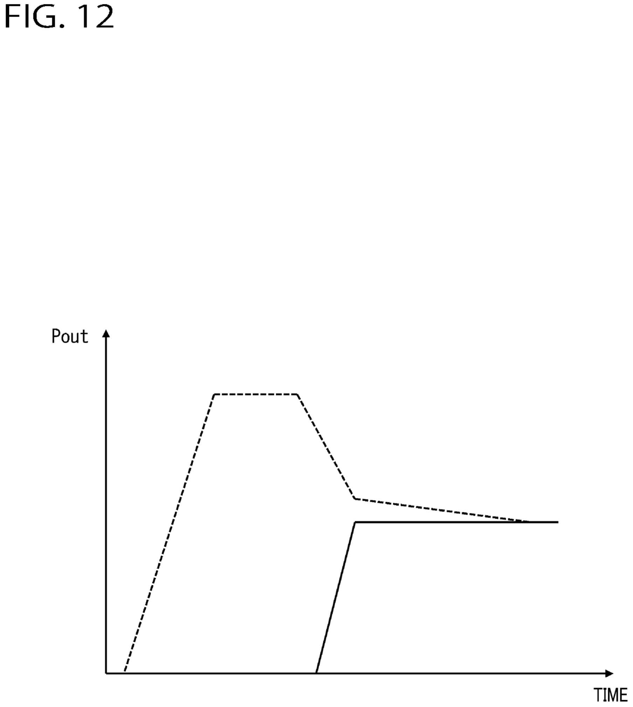

Fig. 12 illustrates the determination process of Fig. 11. Referring to Fig. 12, the horizontal axis represents time, and the vertical axis represents output pressure Pout. Referring to Fig. 12, the state change described with reference to step S60 is shown by a dashed line, and the state change in which a transition is made from the pressure intensification period to the period of stabilization at the input pressure Pin_1 is shown as a solid line for comparison. As shown in Fig. 12, the output pressure Pout immediately after the transition from the pressure reduction period to the period of stabilization at the input pressure Pin_1 is greater than the output pressure Pout immediately after the transition from the pressure intensification period to the period of stabilization at the input pressure Pin_1 due to the influence of hysteresis characteristic. When a transition is made from the pressure reduction period to the period of stabilization at the input pressure Pin_1, however, the output pressure Pout will gradually decrease due to an air leak. The determination unit 130 can determine that the shorter the time until the output pressures Pout in the respective states become equal, the greater the degree of air leakage. This makes it possible to determine the urgency according to the degree of air leakage.

As described above, a state determination apparatus 100 of the embodiment is a state determination apparatus 100 adapted to determine a state of at least one of an air control valve or a flow path 20 used in a vehicle brake, wherein the air control valve discharges air with an output pressure Pout corresponding to an input pressure Pin, which is a pressure of air introduced, to a supply flow path leading to a brake cylinder 16t, the state determination apparatus 100 including: an acquisition unit 110 that acquires a first measurement value 92 of the input pressure Pin and of the output pressure Pout at one or more points of time in a pressure intensification period in which the input pressure Pin increases and acquires a second measurement value 94 of the input pressure Pin and of the output pressure Pout at one or more points of time in a pressure reduction period in which the input pressure Pin decreases; a calculation unit 120 that calculates a difference D in at least one of the input pressure Pin or the output pressure between the pressure intensification period and the pressure reduction period, based on the first measurement value 92 and the second measurement value 94; and a determination unit 130 that determines a state of at least one of the air control valve or the flow path 20 according to the difference D.

This makes it possible to determine the state of at least one of the air control valves or the flow path 20 used in the vehicle brake, by simply acquiring the measurement value during each of the pressure intensification period and the pressure reduction period without requiring any special operations.

In the state determination apparatus 100, the acquisition unit 110 may acquire the first measurement value 92 at multiple points of time in the pressure intensification period and acquires the second measurement value 94 at multiple points of time in the pressure reduction period, and the calculation unit 120 may calculate the difference D based on a first approximate line 96 of the first measurement value 92 and a second approximate line 98 of the second measurement value 94 in a coordinate plane defined by two axes representing the input pressure Pin and the output pressure Pout. The difference D is calculated based on the first measurement value 92 and the second measurement value 94 respectively acquired at multiple points of time so that it is possible to reduce the influence of the variation in the measurement value, measurement error, etc. as compared to calculating the difference D based on the first measurement value 92 and the second measurement value 94 respectively acquired at one point of time. Therefore, the accuracy of determination can be further improved.

In the state determination apparatus 100, the determination unit 130 may determine that an air leak occurs in the flow path 20 when the difference D is below a first threshold value. This makes it possible to prevent accidents by taking measures against air leakage such as repairing pipes.

In the state determination apparatus 100, the determination unit 130 may determine that stubbornness of the air control valve occurs when the difference D exceeds a second threshold value. This makes it possible to prevent accidents by taking measures against the stubbornness of the air control valve such as replacing the air control valve.

The state determination apparatus may further include: a storage unit 140 that accumulates and stores the difference D calculated by the calculation unit 120. This allows the storage unit 140 to accumulate and store the difference D for use in analysis of the transition in the difference over time.

In the state determination apparatus 100, the acquisition unit 110 may acquire the first measurement value 92 and the second measurement value 94 when the railway vehicle 1 is shipped or when the railway vehicle 1 moves at a predetermined speed or below. Acquiring the measurement value at the time of shipment of the railway vehicle 1 can reduce the influence on the measurement value from environmental factors because environmental factors such as temperature will be similar when, for example, the vehicle is shipped at a fixed time every day. Further, the brake pressure tends to be relatively stabilized when the value is acquired while the railway vehicle 1 is running at a predetermined speed or below so that the variation in the measurement value can be reduced.

Exemplary embodiments of the present disclosure have been described above in detail. The embodiments described above are merely specific examples of practicing the present disclosure. The details of the embodiments do not limit the technical scope of the present disclosure. A number of design modifications such as modification, addition, deletion, etc. of constituting elements may be made to the extent that they do not depart from the idea of the invention defined by the claims. Although the details subject to such design modification are emphasized in the embodiments by using phrases such as "of the embodiment" and "in the embodiment", details not referred to as such are also subject to design modification.

### [Variation]

A description will be given of variations. In the drawings and description of the variations, constituting elements and members identical or equivalent to those of the embodiment shall be denoted by the same reference numerals. Duplicative explanations are omitted appropriately and features different from those of the embodiment will be highlighted.

In the description of the embodiment, an example in which each of the brake control apparatus 50 and the state determination apparatus 100 is provided one each in the railway vehicle 1, but the embodiment is not limited to this. For example, multiple brake control apparatuses 50 and multiple state determination apparatuses 100 may be provided in each railway vehicle 1. Alternatively, the state determination apparatus 100 may be provided one each for multiple railway vehicles 1, in which case the state determination apparatus 100 may receive the measurement value of the pressure sensor 80 from each of the multiple brake control apparatuses 50.

Further, the state determination apparatus 100 may be provided as a function of the control unit 52 of the brake control apparatus 50. In this case, the control unit 52 does not need to be equipped with the transmission unit 60.

Alternatively, the first threshold value and the second threshold value for the difference D may not be determined based on the first measurement value 92 and the second measurement value 94. For example, the first threshold value and the second threshold value may be values prepared in advance of the shipment of the state determination apparatus 100.

The variations described above provide the same advantage and benefit as the embodiments.

Any combination of the embodiment and the variation described above will also be useful as an embodiment of the present disclosure. New embodiments created by the combination provide the advantages of embodiment and the variation combined.

Of the embodiments disclosed in this specification, those in which a plurality of functions are provided in a distributed manner may be provided by aggregating some or all of the plurality of functions. Conversely, a plurality of functions provided in an aggregated manner may be provided by distributing some of all of the plurality of functions. Regardless of whether functions are aggregated or distributed, they may be configured so as to achieve the purpose of the invention.

## Claims

1. A state determination apparatus (100) adapted to determine a state of at least one of an air control valve (24, 28) or a flow path (20) used in a vehicle brake,
wherein the air control valve (24, 28) discharges air with an output pressure corresponding to an input pressure, which is a pressure of air introduced, to a supply flow path leading to a brake cylinder (16t),
the state determination apparatus (100) comprising:
an acquisition unit (110) that acquires a first measurement value of the input pressure and of the output pressure at one or more points of time in a pressure intensification period in which the input pressure increases and acquires a second measurement value of the input pressure and of the output pressure at one or more points of time in a pressure reduction period in which the input pressure decreases;
a calculation unit (120) that calculates a difference in at least one of the input pressure or the output pressure between the pressure intensification period and the pressure reduction period, based on the first measurement value and the second measurement value; and
a determination unit (130) that determines a state of at least one of the air control valve (24, 28) or the flow path (20) according to the difference.

2. The state determination apparatus (100) according to claim 1,
wherein the acquisition unit (110) acquires the first measurement value at multiple points of time in the pressure intensification period and acquires the second measurement value at multiple points of time in the pressure reduction period, and
the calculation unit (120) calculates the difference based on an approximate line of the first measurement value and an approximate line of the second measurement value in a coordinate plane defined by two axes representing the input pressure and the output pressure.

3. The state determination apparatus (100) according to claim 1,
wherein the determination unit (130) determines that an air leak occurs in the flow path (20) when the difference is below a first threshold value.

4. The state determination apparatus (100) according to claim 1,
wherein the determination unit (130) determines that stubbornness of the air control valve (24, 28) occurs when the difference exceeds a second threshold value.

5. The state determination apparatus (100) according to claim 1, further comprising:
a storage unit (140) that accumulates and stores the difference calculated by the calculation unit (120).

6. The state determination apparatus (100) according to claim 1,
wherein the acquisition unit (110) acquires the first measurement value and the second measurement value when the vehicle (1) is shipped or when the vehicle (1) moves at a predetermined speed or below.

7. The state determination apparatus (100) according to claim 1,
wherein, when the determination unit (130) determines that an air leak occurs in the flow path (20), the determination unit (130) determines a degree of air leakage based on a time-dependent change in the output pressure after a transition is made from the pressure reduction period to a period for stabilization at a predetermined input pressure.

8. A state determination method adapted to determine a state of at least one of an air control valve (24, 28) or a flow path (20) used in a vehicle brake,
wherein the air control valve (24, 28) discharges air with an output pressure corresponding to an input pressure, which is a pressure of air introduced, to a supply flow path leading to a brake cylinder (16t),
the state determination method comprising:
acquiring a first measurement value of the input pressure and of the output pressure at one or more points of time in a pressure intensification period in which the input pressure increases and acquiring a second measurement value of the input pressure and of the output pressure at one or more points of time in a pressure reduction period in which the input pressure decreases;
calculating a difference in at least one of the input pressure or the output pressure between the pressure intensification period and the pressure reduction period, based on the first measurement value and the second measurement value; and
determining a state of at least one of the air control valve (24, 28) or the flow path (20) according to the difference.

9. A state determination program adapted to determine a state of at least one of an air control valve (24, 28) or a flow path (20) used in a vehicle brake,
wherein the air control valve (24, 28) discharges air with an output pressure corresponding to an input pressure, which is a pressure of air introduced, to a supply flow path leading to a brake cylinder (16t),
the state determination program comprising:
a module that acquires a first measurement value of the input pressure and of the output pressure at one or more points of time in a pressure intensification period in which the input pressure increases and acquires a second measurement value of the input pressure and of the output pressure at one or more points of time in a pressure reduction period in which the input pressure decreases;
a module that calculates a difference in at least one of the input pressure or the output pressure between the pressure intensification period and the pressure reduction period, based on the first measurement value and the second measurement value; and
a module that determines a state of at least one of the air control valve (24, 28) or the flow path (20) according to the difference.
